# EUROPEAN PATENT SPECIFICATION

(11) **EP 1 273 887 B1**
(45) Date of publication and mention of the grant of the patent: **15.11.2006**
(21) Application number: 02254375.5
(22) Date of filing: 24.06.2002
(51) Int. Cl.: G01C 21/36

(54) **Navigation system**
Navigationssystem
Système de navigation

(30) Priority: 05.07.2001 JP 2001204382
(43) Date of publication of application: 08.01.2003
(73) Proprietor: Alpine Electronics, Inc., Tokyo (JP)
(72) Inventor: Oishi, Tetsuya, c/o Alpine Electronics, Inc., Fukushima (JP)
(74) Representative: Kensett, John Hinton

(56) References cited:
- US-A- 5 835 854
- US-B1- 6 243 675
- PATENT ABSTRACTS OF JAPAN vol. 1997, no. 08, 29 August 1997 (1997-08-29) & JP 09 097266 A (AISIN AW CO LTD), 8 April 1997 (1997-04-08)
- PATENT ABSTRACTS OF JAPAN vol. 1996, no. 11, 29 November 1996 (1996-11-29) & JP 08 193837 A (SONY CORP), 30 July 1996 (1996-07-30)

## Description

### BACKGROUND OF THE INVENTION

### 1. Field of the Invention

The present invention relates to a navigation system for providing various audio guidance information, such as route guidance at intersections and information on facilities.

### 2. Description of the Related Art

Typical on-vehicle navigation systems have various functions including a map display function to display a map such as a local map around the vehicle position on a display screen, a route search function to search for a route to a user specified destination or intermediate point, a route guidance function to guide the vehicle according to the route found by route searching, and a facility search function to search and display facility information.

Most navigation systems are further equipped with a mechanism for outputting various guide information by speech. For example, for route guidance, while presenting a route guide map indicating a guidance route for the vehicle at an intersection at which the vehicle is to be directed, a guidance statement "Turn to the right at the next intersection. This goes toward ..." is provided by speech. A guidance statement including information such as the name and address of a facility may be provided by speech when facility information is searched for.

Some typical navigation systems support an environment where multiple languages are used in a predetermined region such as in Europe, and are adapted to display map images or provide audio navigation using a plurality of different languages.

For example, in order to provide route guidance at an intersection, a known navigation system provides the route guidance, by speech, using a language (or a local dialect) used in the country or region where the vehicle is located. Another known navigation system presents a map such as a route guide map using only a language (local language) used in the country where the vehicle is located, or using both the local language and a user specified language (native language), and provides audio navigation using the native language alone.

The aforementioned navigation system in the related art generates a guidance statement using either the local language specified based on the vehicle location, or the native language specified by the user, and provides the guidance statement by speech.

However, a problem associated with a guidance statement using the local language alone is that a place name or the name of a facility spoken in the local language might often to be difficult to understand. In a guidance statement using the native language alone, on the other hand, advantageously, the name of a facility spoken in the native language may be easily understood; however, because the name of the facility spoken in the local language is not provided, the name of the facility cannot be communicated in the local language, for example, when the user gets out of a vehicle near a point of interest and communicates with local people to find the desired facility.

US 5, 835, 854 discloses a navigation system with means for providing audio guidance statements and means for outputting the statements by speech. When a specified word has different names (readings) in the user's language and in the local language, a guidance statement is formed for uttering first the name in the user's language and then the name in the local language.

### SUMMARY OF THE INVENTION

Accordingly, it is an object of the present invention to provide a navigation system which provides improved usability for audio navigation. To this end, according to the present invention, there is provided a navigation system comprising: word specifying means for specifying a word indicating an audio navigation target: navigation timing determining means for determining a timing for providing audio navigation; guidance statement forming means for, at the timing for providing audio navigation which is determined by the navigation timing determining means, when the word specified by the word specifying means involves a plurality of different readings, forming a statement for audio navigation using the plurality of different readings; speech output means for outputting, by speech, the statement formed by the guidance statement forming means; and priority setting means for setting a user defined priority for at least two of the plurality of readings.

The navigation system may further include a route searching unit for searching for a vehicle route to a destination under predetermined conditions. Preferably, the guidance statement forming unit forms a statement for audio navigation of vehicle route guidance according to the vehicle route found by the route searching unit. This enables a user to know words associated with a guidance route, such as an intersection name, a place name, and/or a road name, which are announced using a plurality of readings, thus increasing route guidance accuracy.

The navigation system may further include a facility information searching unit for searching for facility information. Preferably, the guidance statement forming unit forms a statement for audio navigation of a facility found by the facility information searching unit. This enables a user to know information such as the name and address of the facility which is announced using a plurality of readings, thereby providing convenience which, for example, allows the user to communicate with local people in order to find the target facility, thus increasing usability in facility information search.

The navigation system may further include an operating unit for receiving a user operation command. Preferably, the guidance statement forming unit forms a statement for confirming the content of the operation command performed using the operating unit. This enables a user to confirm words associated with various commands which are announced using a plurality of readings, thus ensuring that the desired operation is instructed.

Preferably, the speech output unit outputs, by speech, statements using the plurality of different readings in the order from the statement using the highest-priority readings according to the priority set by the priority setting unit. This enables a user to freely set the priority for a plurality of readings of a word, as desired.

The navigation system may further include a guidance duration determining unit for determining an allowed time until the audio navigation ends. Preferably, when the guidance duration determining unit determines that the allowed time is short, and the plurality of readings have different priorities, the speech output unit outputs, by speech, a statement using a reading having a high priority, but not using a reading having a low priority.

For example, in the event where route guidance at an intersection is provided, it may be necessary to complete the guidance before the vehicle passes the intersection. Thus, an allowed time until audio navigation ends may vary depending upon the distance between the vehicle position and the intersection. In this event, if the allowed time is short, a guidance statement using a high-priority reading but not using a low-priority reading is provided, thus ensuring that the information essential to the route guidance is provided. If the allowed time is long, conversely, guidance is provided by speech using not only a high-priority reading but also a low-priority reading, thus providing more improved audio navigation. An embodiment of the present invention will now be described, by way of example, with reference to the accompanying drawings, in which:
Fig. 1 is a block diagram of a navigation system according to an embodiment of the present invention;
Fig. 2 is a flowchart showing a routine of the navigation system for providing route guidance at an intersection on the guidance route;
Fig. 3 is a flowchart showing a routine of the navigation system for providing detailed facility information guidance for a specified facility; and
Fig. 4 is a flowchart showing a routine of the navigation system for providing audio navigation to confirm the content of an operation command.

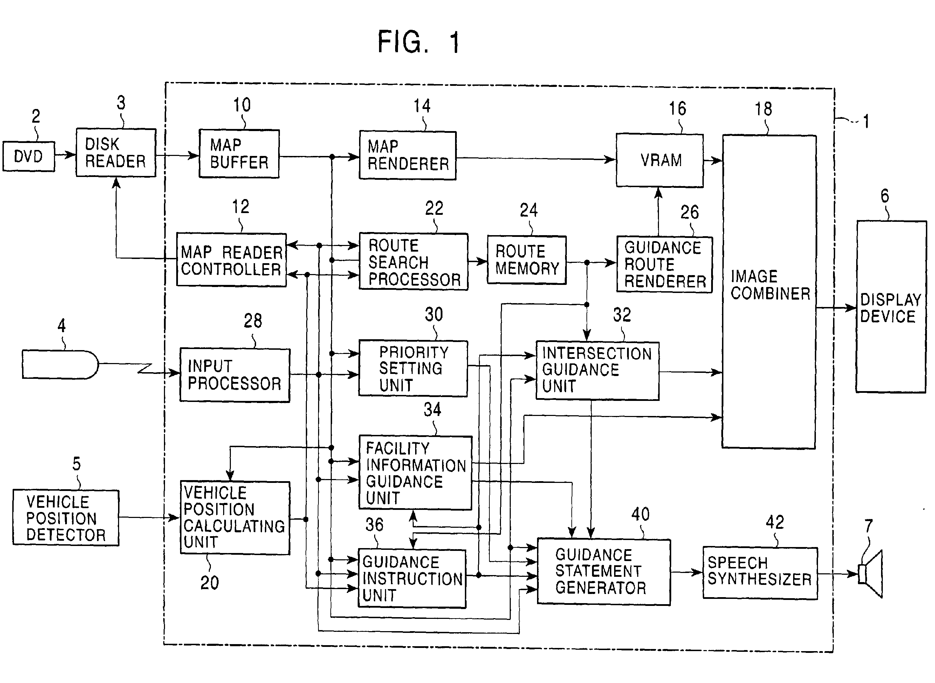

Fig. 1 shows the structure of the navigation system. Referring to Fig. 1, the navigation system includes a navigation controller 1, a DVD (digital versatile disk) 2, a disk reader 3, a remote control unit 4, a vehicle position detector 5, a display device 6, and a speaker 7.

The navigation controller 1 controls the overall operation of the navigation system. The navigation controller 1 executes a predetermined operating program using a CPU (central processing unit), a ROM (read-only memory), a RAM (random access memory), etc., to implement its functionality. The detailed configuration of the navigation controller 1 is described later.

The DVD 2 is an information storage medium having map data stored therein that is necessary for presenting a map or for route searching. The DVD 2 further contains predetermined language data for multiple languages in order to provide various audio navigation or to display images in multiple languages. More specifically, the language data includes character data for image display and audio output data for various words indicating place names and facility names, and supports the world's major languages (for example, English, French, German, Japanese, etc.).

One or a plurality of DVDs 2 are loaded into the disk reader 3 to read data such as map data from any of the DVDs 2 under the control of the navigation controller 1. The disk to be loaded need not be a DVD but may be a CD (compact disc). Alternatively, DVDs and CDs may be selectively loaded therein.

The remote control unit 4 includes various operation keys such as a joystick for determining the up, down, right, or left direction, a ten-key, and an enter key for determining various settings. The remote control unit 4 outputs a signal representing the operation to the navigation controller 1.

The vehicle position detector 5 includes a GPS (global positioning system) receiver, a direction sensor, and a distance sensor, by way of example, for detecting the vehicle position (such as the latitude and longitude) at a predetermined timing, and outputs a detection result.

The display device 6 displays various images for map information on an area around the vehicle position, intersection information, etc., based on rendered data output from the navigation controller 1.

The speaker 7 outputs speech route guidance at an intersection based on the speech signal output from the navigation controller 1.

The detailed configuration of the navigation controller 1 shown in Fig. 1 is now described.

The navigation controller 1 includes a map buffer 10, a map reader controller 12, a map renderer 14, a VRAM (video RAM) 16, an image combiner 18, a vehicle position calculating unit 20, a route search processor 22, a route memory 24, a guidance route renderer 26, an input processor 28, a priority setting unit 30, an intersection guidance unit 32, a facility information guidance unit 34, a guidance instruction unit 36, a guidance statement generator 40, and a speech synthesizer 42.

The map buffer 10 temporarily stores data, such as map data, that is read from the DVD 2 by the disk reader 3. The map reader controller 12 outputs a command for reading map data for a predetermined area to the disk reader 3 based on the vehicle position calculated by the vehicle position calculating unit 20 or according to a request from the input processor 28.

The map renderer 14 generates map rendering data necessary for display according to the map data stored in the map buffer 10.

The VRAM 16 stores the map rendering data generated by the map renderer 14 and guidance route rendering data generated by the guidance route renderer 26.

The image combiner 18 superimposes the map rendering data read from the VRAM 16 based on the vehicle position etc., and the rendering data output from each of the intersection guidance unit 32 and the facility information guidance unit 34 to generate a composite image, and outputs the combined rendering data to the display device 6.

The vehicle position calculating unit 20 calculates the vehicle position according to the detection data output from the vehicle position detector 5. If the calculated vehicle position is not located on a road in the map data, the vehicle position calculating unit 20 then performs map matching to correct the vehicle position.

The route search processor 22 searches for a route which connects a starting point to a preset destination and which satisfies predetermined conditions. For example, the most cost-effective route under various conditions including the shortest distance and the shortest time is set as the guidance route. The guidance route data found by the route search processor 22 is stored in the route memory 24.

The guidance route renderer 26 selects data, from the guidance route data found by the route search processor 22 and stored in the route memory 24, which belongs to the rendered map area stored in the VRAM 16 at that time, and generates rendering data in which the guidance route is superimposed on the map image.

The input processor 28 outputs a command for an action in response to the various operation commands input from the remote control unit 4 to the components within the navigation controller 1.

The priority setting unit 30 sets the priority for a plurality of languages used to form guidance statements. Specifically, the priority setting unit 30 determines the language which is usually used by a user (hereinafter referred to as a "native language"), and the native language is set as the highest-priority language. Methods for setting the native language may include a method to determine the native language based on personal information (for example, nationality, address, etc.) that is registered by the user in advance and the coordinates (latitude and longitude) of the geographical location of the personal residence, and a method to allow a user to specify which language should be used as the native language.

The priority setting unit 30 further sets the priority for languages other than the native language according to the user's settings or the country where the vehicle is located. For example, if the country where the vehicle is located is Country A and Language a is commonly used in Country A, the priority setting unit 30 sets Language a as the second-highest-priority language. If a user specifies Language b, the priority setting unit 30 also sets Language b as the second-highest-priority language.

The intersection guidance unit 32 generates a navigation image (route guide map) for providing route guidance at an intersection which the vehicle approaches, and outputs the navigation image to the image combiner 18. The intersection guidance unit 32 further specifies a word significant to the route guidance provided by speech, such as an intersection name, a traveling direction, and/or a place name indicating an intermediate point, which the vehicle goes toward, after the vehicle passes the intersection.

The facility information guidance unit 34 searches for facility information according to a user's command to generate a navigation image indicating the search results, and outputs the generated image to the image combiner 18. The facility information guidance unit 34 further specifies words significant to the route guidance provided by speech, such as the name and address of a facility, and outputs the result to the guidance statement generator 40. According to the present embodiment, the facility to be searched for by the facility information guidance unit 34 may include personal residences.

The guidance instruction unit 36 determines the timing for providing various guidance. Specifically, the guidance instruction unit 36 determines that it is time to provide route guidance when the vehicle position on the guidance route approaches within a predetermined distance of an intersection where the vehicle is to be directed. The guidance instruction unit 36 then reports this decision to both the facility information guidance unit 34 and the guidance statement generator 40.

The guidance instruction unit 36 further determines that it is time to provide facility information guidance when the position of a facility displayed on a map is indicated by a cursor using the remote control unit 4 or when a facility search based on an address and a telephone number is instructed. The guidance instruction unit 36 then reports this decision to both the facility information guidance unit 34 and the guidance statement generator 40.

The guidance instruction unit 36 further determines an allowed time until route guidance ends. More specifically, the allowed time until route guidance ends can be determined by calculating the expected time of arrival at an intersection based on the distance between the vehicle position and the intersection, the vehicle speed, and the like.

The guidance statement generator 40 forms a guidance statement for providing route guidance at an intersection based on the words output from the intersection guidance unit 32. The guidance statement generator 40 further forms a guidance statement for providing facility information guidance based on the words output from the facility information guidance unit 34. The guidance statement generator 40 according to the present embodiment forms guidance statements using multiple languages according to the language priority set by the priority setting unit 30.

The guidance statement generator 40 according to the present embodiment may form a guidance statement using only a language having a high priority based on the allowed time reported by the guidance instruction unit 36 if the allowed time is short. Specific examples of the guidance statement formed by the guidance statement generator 40 are described later.

The speech synthesizer 42 generates a speech signal for audibly outputting the guidance statement formed by the guidance statement generator 40, and outputs the speech signal to the speaker 7.

The intersection guidance unit 32 and the facility information guidance unit 34 serve as word specifying units. The guidance instruction unit 36 serves as a navigation timing determining unit and a guidance duration determining unit. The guidance statement generator 40 serves as a guidance statement forming unit. The speaker 7 and the speech synthesizer 42 serve as speech output units. The route search processor 22 serves as a route searching unit. The facility information guidance unit 34 serves as a facility information searching unit. The priority setting unit 30 serves as a priority setting unit. The remote control unit 4 and the input processor 28 serve as operating units.

The operation of the thus constructed navigation system according to the present embodiment is now described.

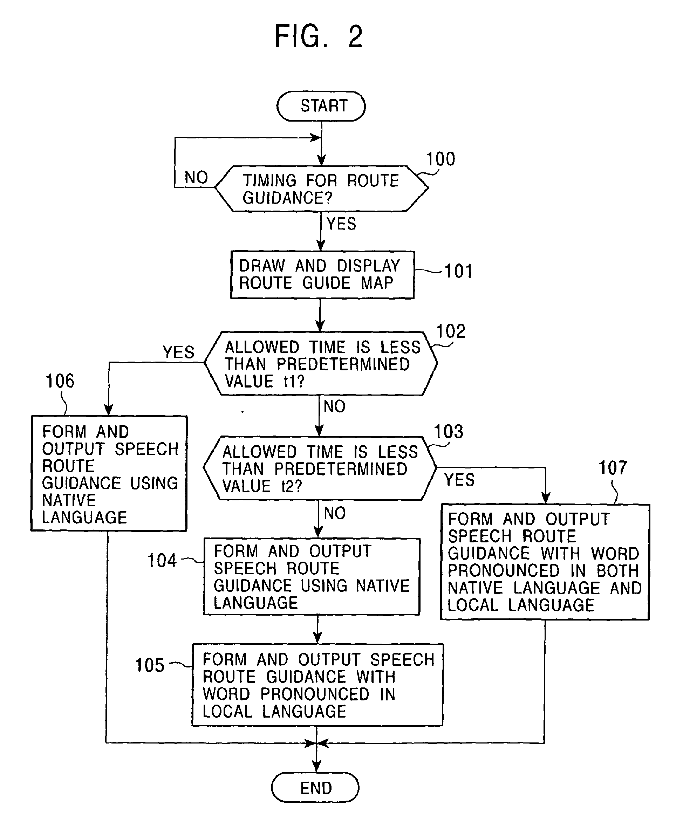

Fig. 2 is a flowchart showing a routine of the navigation system for providing route guidance at an intersection on the guidance route.

The guidance instruction unit 36 determines whether or not it is time to provide route guidance at an intersection (step 100). If it is determined that it is not time to provide route guidance, a negative result is obtained, and the procedure is returned to step 100 to repeat.

If it is time to provide route guidance, an affirmative result is obtained in step 100, and this result is passed from the guidance instruction unit 36 to the intersection guidance unit 32. The intersection guidance unit 32 which has received the result generates a route guide map for providing route guidance at an intersection which the vehicle approaches, and outputs the route guide map to the image combiner 18. Thus, a predetermined route guide map is displayed on a screen of the display device 6 (step 101).

The guidance instruction unit 36 further determines whether or not an allowed time until route guidance ends is greater than a predetermined value t1 (for example, 30 seconds) (step 102).

If the allowed time is greater than the predetermined value t1, a negative result is obtained in step 102, and the guidance instruction unit 36 determines whether or not the allowed time is greater than a predetermined value t2 (for example, 60 seconds), where t1 < t2 (step 103).

If the allowed time is greater than the predetermined value t2, a negative result is obtained in step 103, and the fact that it is time to provide route guidance and the determination result for the allowed time are passed from the guidance instruction unit 36 to the guidance statement generator 40.

In response, the guidance statement generator 40 acquires, from the intersection guidance unit 32, a predetermined word significant to the route guidance, such as an intersection name, a traveling direction, and/or a place name indicating an intermediate point after the vehicle passes the intersection, and forms a route guidance statement using a native language (language having the highest priority). Based on the guidance statement formed by the guidance statement generator 40, a speech signal is generated by the speech synthesizer 42, and is then input to the speaker 7 to provide the route guidance statement by speech (step 104).

The guidance statement generator 40 forms a route guidance statement with a word having a plurality of readings, such as a place name, pronounced in a local language (language having the second highest priority). Based on the route guidance statement formed by the guidance statement generator 40, a speech signal is generated by the speech synthesizer 42, and is then input to the speaker 7 to provide the route guidance statement by speech (step 105).

An exemplary guidance statement provided by speech in steps 104 and 105 is now presented. For example, if German is set as the native language and French is set as the local language, the event where a guidance statement "Turn to the right at the next intersection. This goes toward Strasbourg" is provided by speech is taken as an example.

In a first guidance statement, the guidance statement "Turn to the right at the next intersection. This goes toward Strasbourg" in which only the word "Strasbourg" is pronounced in German is provided by speech. In a second guidance statement, the guidance statement "Turn to the right at the next intersection. This goes toward Strasbourg" in which only the word "Strasbourg" is pronounced in French is provided by speech. It is noted that the guidance statement is herein written in English for convenience of illustration although the guidance statement is actually formed using the native language (German in this example).

According to the present embodiment, therefore, if the allowed time is greater than the predetermined value t2, i.e., the allowed time is sufficiently long, two kinds of guidance statements, namely, a guidance statement using a native language and a guidance statement with a word such as a place name pronounced in a local language, are provided by speech, thereby improving audio navigation and thus increasing the usability.

If the allowed time until route guidance ends is less than the predetermined time t1, an affirmative result is obtained in step 102, and the fact that it is time to provide route guidance and the determination result for the allowed time are passed from the guidance instruction unit 36 to the guidance statement generator 40.

In response, the guidance statement generator 40 acquires a predetermined word, which is significant to the route guidance, from the intersection guidance unit 32 to form a route guidance statement using the native language. Based on the guidance statement formed by the guidance statement generator 40, a speech signal is generated by the speech synthesizer 42, and is then input to the speaker 7 to provide the route guidance statement by speech (step 106).

According to the present embodiment, therefore, if the allowed time is less than the predetermined value t1, i.e., the allowed time is not sufficiently long, a guidance statement using only the native language is provided. The same example of the guidance statement as previously described with respect to step 104 can be used in this case, and an overlapping description thereof is not shown. Therefore, if the allowed time is short, a guidance statement with a word pronounced only in a native language having a high priority, but not in a local language having a low priority, is provided, thus ensuring that the information essential to route guidance is provided in a short time.

If the allowed time until route guidance ends is greater than the predetermined value t1 but is less than the predetermined value t2, an affirmative result is obtained in step 103, and the fact that it is time to provide route guidance and the determination result for the allowed time are passed from the guidance instruction unit 36 to the guidance statement generator 40.

In response, the guidance statement generator 40 acquires predetermined words, which are significant to the route guidance, from the intersection guidance unit 32 to form a route guidance statement with a word having a plurality of readings, such as a place name, pronounced both in the native language and the local language. Based on the guidance statement formed by the guidance statement generator 40, a speech signal is generated by the speech synthesizer 42, and is then input to the speaker 7 to provide the route guidance statement by speech (step 107).

An exemplary guidance statement provided by speech in step 107 is now presented. As in the aforementioned example, if German is set as the native language and French is set as the local language, the event where a guidance statement "Turn to the right at the next intersection. This goes toward Strasbourg" is provided by speech is taken as an example. In this event, the guidance statement "Turn to the right at the next intersection. This goes toward Strasbourg" in which the word "Strasbourg" is pronounced in German and French. It is noted that the guidance statement is herein written in English for convenience of illustration although the guidance statement is actually formed using the native language (German in this example).

According to the present embodiment, therefore, if the allowed time is greater than the predetermined value t1 but is less than the predetermined value t2, i.e., the allowed time is somewhat long, one guidance statement with a word such as a place name pronounced in both a native language and a local language is formed. This allows a guide statement with a word such as a place name pronounced in both a native language and a local language to be provided within a short time relative to when two guide statements are provided by speech.

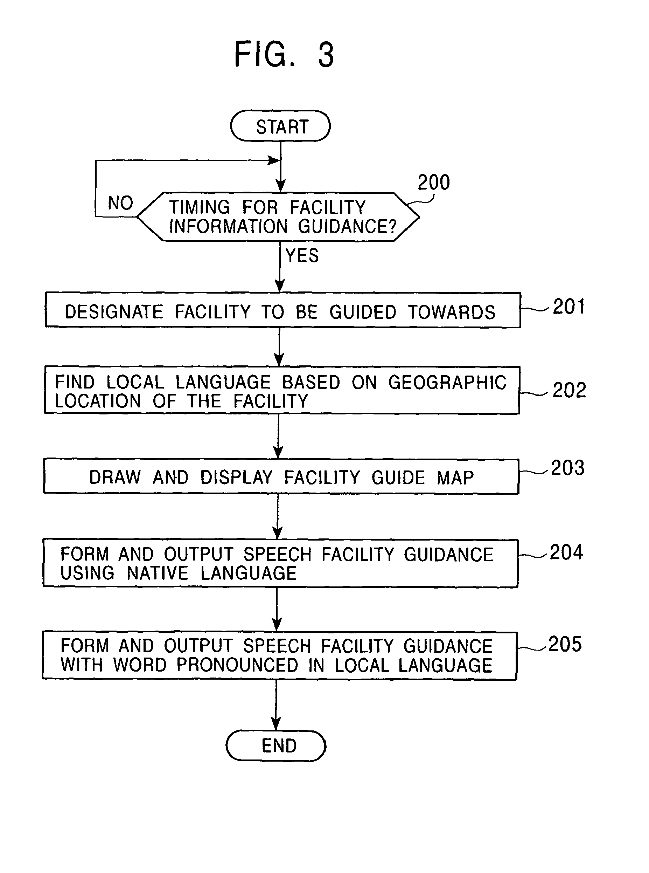

Fig. 3 is a flowchart showing a routine of the navigation system for providing detailed facility information guidance for a specified facility.

The guidance instruction unit 36 determines whether or not it is time to provide facility information guidance (step 200). As described above, the guidance instruction unit 36 determines that it is time to provide facility information guidance when the position of a facility displayed on a map is indicated by a cursor using the remote control unit 4 or when a facilities search based on an address and a telephone number is instructed. If it is not time to provide facility information guidance, a negative result is obtained, and the routine returns to step 200 to repeat.

If it is time to provide facility information guidance, an affirmative result is obtained in step 200, and the facility information guidance unit 34 specifies a facility to be guided towards based on the coordinates (latitude and longitude) of the point indicated by the cursor, a telephone number, or the like (step 201).

The priority setting unit 30 searches for a language local to a region around the location of the facility to find a local language (language having the second highest priority) (step 202).

Then, the facility information guidance unit 34 generates a map for providing detailed guidance information for the specified facility, including the name, address and telephone number of the facility, and outputs the map to the image combiner 18. Thus, a predetermined facility information map is displayed on a screen of the display device 6 (step 203).

The fact that it is time to provide facility information guidance is passed from the guidance instruction unit 36 to the guidance statement generator 40. In response, the guidance statement generator 40 acquires a predetermined word significant to the facility information guidance, such as the name and address of the facility, from the facility information guidance unit 34 to form a guidance statement for the facility information using the native language. Based on the guidance statement formed by the guidance statement generator 40, a speech signal is generated by the speech synthesizer 42, and is then input to the speaker 7 to provide the facility information guidance statement by speech (step 204).

The guidance statement generator 40 then forms a facility information guidance statement with a word having a plurality of readings, such as the name of the facility and a place name, pronounced in the local language. Based on the guidance statement formed by the guidance statement generator 40, a speech signal is generated by the speech synthesizer 42, and is then input to the speaker 7 to provide the facility information guidance statement by speech (step 205).

An exemplary guidance statement provided by speech according to the just described routine is now presented. For example, if Japanese is set as the native language and German is set as the local language, the event where a guidance statement "The target facility is Café ABC" to guiding the name of a café is provided by speech is taken as an example.

In a first guidance statement, the guidance statement "The target facility is Café ABC" in which the words "Café ABC" are pronounced in Japanese is provided by speech. In a second guidance statement, the guidance statement "The target facility is Café ABC" in which the words "Café ABC" are pronounced in German is provided by speech.

According to the present embodiment, therefore, when a facility to be guided towards is specified by facility searching, a guidance statement using a native language and a guidance statement with a word such as the name of the facility and a place name pronounced in a local language are sequentially provided. This enables a user to know the name of the facility pronounced in both the native language and the local language, and therefore provides convenience which, for example, allows the user who is apart from the vehicle to communicate with local people in order to find the facility such as Café ABC, thus increasing usability in facility information search.

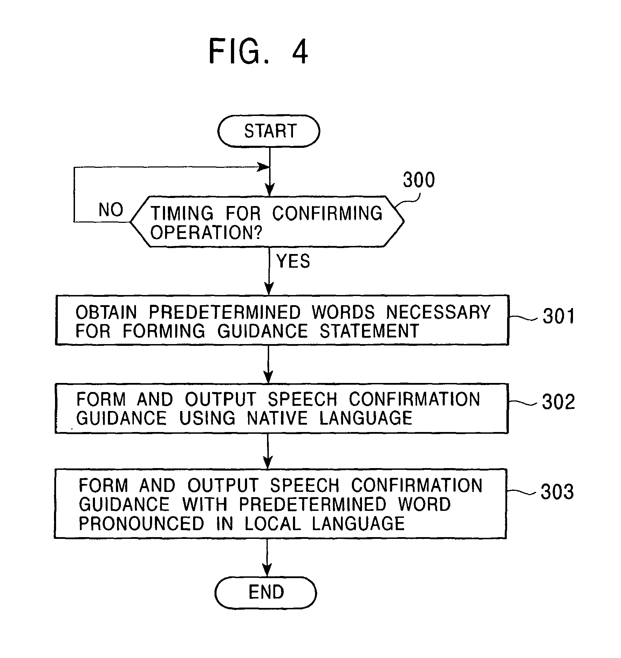

Fig. 4 is a flowchart showing a routine of the navigation system for providing audio navigation to confirm the content of an operation command. The routine is directed to audio navigation to confirm the content of an operation command in which a personal residence is searched for based on a telephone number and is set for the destination in route searching, by way of example.

The guidance instruction unit 36 determines whether or not it is time to provide navigation to confirm an operation (step 300). Specifically, the guidance instruction unit 36 determines that it is time to provide navigation to confirm an operation when a personal residence is searched for based on a telephone number after which a command to set the residence for the destination is entered using the remote control unit 4. If it is not time to provide the navigation, the routine returns to step 300 to repeat.

If it is time to provide the navigation, an affirmative result is obtained in step 300, and the fact that it is time to provide the navigation is passed from the guidance instruction unit 36 to the guidance statement generator 40.

In response, the guidance statement generator 40 acquires a predetermined word significant to a guidance statement for confirming the operation (step 301). In this example, data, such as the name of the person whose residence has been for the destination, is acquired as the predetermined word.

The guidance statement generator 40 forms a guidance statement for confirming the operation using the native language. Based on the guidance statement formed by the guidance statement generator 40, a speech signal is generated by the speech synthesizer 42, and is then input to the speaker 7 to provide the guidance statement by speech (step 302).

The guidance statement generator 40 then forms a guidance statement with the word acquired from the facility information guidance unit 34 (the name of the owner of the residence in this example) read in the local language. Based on the guidance statement formed by the guidance statement generator 40, a speech signal is generated by the speech synthesizer 42, and is then input to the speaker 7 to provide the guidance statement by speech (step 303).

An exemplary guidance statement provided by speech according the just described routine is now presented. If Japanese is set as the native language and the residence of Mr. Schmidt (Herr Schmidt) located in Germany is set for the destination in route searching, the event where a guidance statement for confirming the operation is provided by speech is taken as an example.

In a first guidance statement, the guidance statement "The residence of Mr. Schmidt is set for the destination" in which the words "Mr. Schmidt" are read in Japanese is provided by speech. In a second guidance statement, the guidance statement "The residence of Herr Schmidt is set for the destination" in which the words "Mr. Schmidt" are read as "Herr Schmidt" in German is provided by speech. Accordingly, in order to provide audio navigation to confirm an operation, a guidance statement using a native language and a guidance statement with a predetermined word such as a name read in a local language are sequentially provided, thus allowing a user to know the name read in both the native language and the local language, thereby ensuring that the desired operation is instructed.

In the navigation system according to the present embodiment, in order to provide audio navigation for route guidance at an intersection on a guidance route or for detailed faculty information, guidance statements are formed with a predetermined word read in a plurality of languages, namely, a native language and a local language. This allows a user to know the predetermined word read in both the native language which is easily understood by the user and the local language, thus improving usability for audio navigation.

The present invention is not limited to the aforementioned embodiments, and a variety of other embodiments as modified without departing from the scope of the invention as defined in the claims may be made. For example, in the foregoing embodiments, a guidance statement (or guidance statements) with a predetermined word read in the native language of a user and the local language of the region where the vehicle is located is formed and output by speech. However, in an alternative embodiment, a guidance statement (or guidance statements) may be formed using a plurality of readings such as a combination of a standard language and a local dialect and combination of an official name and a common name (such as an abbreviated name or a colloquial name).

More specifically, if a guidance statement is formed using a combination of a standard language and a local dialect, the standard language is set as the highest-priority language, and the local dialect of the region (for example, the Tohoku district or the Hokuriku district) where the vehicle is presently located is set as a local language (the second-highest-priority language). A guidance statement, such as a route guidance statement, with a predetermined word read in both the standard language and the local dialect is formed. If a guidance statement is formed using a combination of an official name and a common name, a guidance statement with, for example, the name of a road read in the official name, such as "National Route ×××", and the common name, such as "××× Blvd" or "××× Street", may be formed.

In the above-described embodiments, in a plurality of languages used to form a guidance statement, the native language of a user is set as the highest-priority language, and the local language of the region where the vehicle is located is set as the second-highest-priority language. The present invention is not limited to this priority method, and a variety of modifications may be made.

More specifically, three or more languages may be set as languages used to form a guidance statement. For example, in the event where a vehicle driver and passenger has different native languages, the native language of the driver may be set as the highest-priority language, the native language of the passenger at the second-highest-priority language, and the local language based on the vehicle position at the third-highest-priority language. Then, guidance useful to the driver and the passenger can be provided using the languages familiar with the driver and the passenger and using the local language based on the vehicle position. In another event where the vehicle is located in a region having a plurality of official languages, such as Switzerland, the priority of languages used to form a guidance statement may be determined such that the native language of a user is set as the highest-priority language, a first official language at the second-highest-priority language, a second official language at the third-highest-priority language, and so on.

In the foregoing embodiments, in order to provide route guidance at an intersection, an allowed time until the route guidance ends is determined, and the content of a guidance statement is modified according to the allowed time in such a manner that a guidance statement using a low-priority language is not provided if the allowed time is short. The same processing may be applied to other guidance such as facility information guidance or confirmation guidance for an operation command.

More specifically, if one guidance statement which is provided by speech for facility information guidance or conformation guidance for an operation command is too long, it may be difficult to understand the content thereof. In this case, an allowed time until one guidance statement ends (for example, 20 seconds) may be set in advance. Then, the time required for providing a guidance statement by speech may be determined based on the number of characters in a word indicating a navigation target (a word having a plurality of readings) and the like. If it exceeds the predetermined allowed time, the guidance statement may be changed to a guidance statement using a word in a high-priority language alone.

In the aforementioned embodiments, navigation to conform an operation when a personal residence is searched for based on a telephone number after which a command to set the residence for the destination in route searching is entered has been described, by way of example. Other operations may be contemplated.

Guidance statements to be provided by speech may be provided by different tones or voices depending upon a plurality of readings. For example, a guidance statement using a native language may be provided using a male voice, and a guidance statement using a local language may be provided using a female voice. In the event where one guidance statement is announced using a combination of a native language and a local language, a portion of the guidance statement that is announced in the local language and the other portions may be provided using different voices. The different tones or voices used depending upon a plurality of readings allow portions provided using the plurality of readings to be clearly differentiated from each other, thus improving the accuracy of audio navigation.

According to the present invention, therefore, if a word indicating an audio navigation target has a plurality of readings, a speech guidance statement with the word announced using plurality of readings is formed, thus improving usability for audio navigation.

## Claims

1. A navigation system comprising:
word specifying means (32, 34) for specifying a word indicating an audio navigation target;
navigation timing determining means (36) for determining a timing for providing audio navigation;
guidance statement forming means (40) for, at the timing for providing audio navigation which is determined by the navigation timing determining means (36), when the word specified by the word specifying means (32, 34) involves a plurality of different readings, forming a statement for audio navigation using the plurality of different readings;
speech output means (7, 42) for outputting, by speech, the statement formed by the guidance statement forming means (40); and
priority setting means (30) for setting user defined priorities for at least two of the plurality of readings.

2. A navigation system according to claim 1, further comprising route searching means (22) for searching for a vehicle route to a destination under predetermined conditions.
wherein the guidance statement forming means (40) forms a statement for audio navigation of vehicle route guidance according to the vehicle route found by the route searching means (22).

3. A navigation system according to claim 2,
wherein the statement for audio navigation of vehicle route guidance includes an intersection name, a travelling direction, a road name, a place name, or an intermediate point which the vehicle goes toward.

4. A navigation system according to claim 1, further comprising facility information searching means (34) for searching for facility information,
wherein the guidance statement forming means (40) forms a statement for audio navigation of a facility found by the facility information searching means (34).

5. A navigation system according to claim 4,
wherein the statement for audio navigation of the facility includes the name of the facility, an address of the facility, a person's name, or a person's address.

6. A navigation system according to claim 1, further comprising operating means (28) for receiving a user operation command,
wherein the guidance statement forming means (40) forms a statement for confirming the content of the operation command performed using the operating means (28).

7. A navigation system according to claim 6,
wherein, when a personal residence is searched for based on a telephone number, the guidance statement forming means (40) forms a statement for confirming the content of the personal residence.

8. A navigation system according to any one of claims 1 to 7,
wherein the speech output means (7, 42) outputs, by speech, statements using the plurality of different readings in the order from the statement using the highest-priority readings according to the priority set by the priority setting means (30).

9. A navigation system according to any one of claims 1 to 7,
wherein the speech output means (7, 42) outputs, by speech, the statement using the plurality of readings in the user selected language and in the local language based on the vehicle position.

10. A navigation system according to any one of claims 1 to 9, further comprising guidance duration determining means (36) for determining an allowed time until the audio navigation ends,
wherein, when the guidance duration determining means (36) determines that the allowed time is short, and the plurality of readings have different priorities, the speech output means (7, 42) outputs, by speech, a statement using a reading having a high priority, but not using a reading having a low priority.

## Patentansprüche

1. Navigationssystem, umfassend:
eine Wortangabeeinrichtung (32, 34) zur Angabe eines Worts, das bezeichnend ist für eine Ton-Navigationsvorgabe;
eine Navigationszeitvorgabe-Bestimmungseinrichtung (36) zur Bestimmung einer Zeitvorgabe zur Bereitstellung von Ton-Navigation;
eine Führungsaussage-Bildungseinrichtung (40) zur Bildung einer Aussage, an der Zeitvorgabe zur Bereitstellung von Ton-Navigation, welche durch die Navigationszeitvorgabe-Bestimmungseinrichtung (36) bestimmt wird, wenn das Wort, das durch die Wortangabeeinrichtung (32, 34) angegeben wird, eine Mehrzahl von verschiedenen Lesarten involviert, für Ton-Navigation unter Verwendung der Mehrzahl von verschiedenen Lesarten;
eine Sprachausgabeeinrichtung (7, 42) zur Ausgabe, mittels Sprache, der Aussage, die durch die Führungsaussage-Bildungseinrichtung (40) gebildet wird; und
eine Prioritätseinrichtungseinrichtung (30) zur Einrichtung von benutzerdefinierten Prioritäten für wenigstens zwei der Mehrzahl von Lesarten.

2. Navigationssystem nach Anspruch 1, weiterhin umfassend eine Routensucheinrichtung (22) zum Suchen einer Fahrzeugroute zu einem Fahrziel unter vorbestimmten Bedingungen;
wobei die Führungsaussage-Bildungseinrichtung (40) eine Aussage für Ton-Navigation von einer Fahrzeugroutenführung gemäß der Fahrzeugroute bildet, die durch die Routensucheinrichtung (22) gefunden wurde.

3. Navigationssystem nach Anspruch 2, wobei die Aussage für Ton-Navigation der Fahrzeugroutenführung einen Knotenpunktnamen, eine Reiserichtung, einen Straßennamen, einen Ortsnamen oder einen Zwischenpunkt beinhaltet, auf welche(n) das Fahrzeug sich zubewegt.

4. Navigationssystem nach Anspruch 1, weiterhin aufweisend eine Einrichtungsinformations-Sucheinrichtung (34) zum Suchen nach Einrichtungsinformation,
wobei die Führungsaussage-Bildungseinrichtung (40) eine Aussage für Ton-Navigation einer Einrichtung bildet, die durch die Einrichtungsinformations-Sucheinrichtung (34) gefunden wurde.

5. Navigatiossystem nach Anspruch 4, wobei die Aussage für Ton-Navigation der Einrichtung den Namen der Einrichtung, eine Adresse der Einrichtung, einen Personennamen oder eine Personenadresse beinhaltet.

6. Navigationssystem nach Anspruch 1, weiterhin umfassend eine Bedienungseinrichtung (28) zum Erhalt eines Benutzerbedienungsbefehls,
wobei die Führungsaussage-Bildungseinrichtung (40) eine Aussage bildet zur Bestätigung des Inhalts des durchgeführten Bedienungsbefehls unter Benutzung der Bedienungseinrichtung (28).

7. Navigationssystem nach Anspruch 6, wobei die Führungsaussage-Bildungseinrichtung (40), wenn nach einem persönlichen Wohnort basierend auf einer Telefonnummer gesucht wird, eine Aussage zur Bestätigung des Inhalts des persönlichen Wohnorts bildet.

8. Navigationssystem nach einem der Ansprüche 1 bis 7,
wobei die Sprachausgabeeinrichtung (7, 42) mittels Sprache Aussagen unter Benutzung der Mehrzahl von verschiedenen Lesarten in der Reihenfolge von der Aussage benutzend die Lesarten mit höchster Priorität ausgibt gemäß der Priorität, die durch die Prioritätseinrichtungseinrichtung (30) eingestellt ist.

9. Navigationssystem nach einem der Ansprüche 1 bis 7,
wobei die Sprachausgabeeinrichtung (7, 42) mittels Sprache die Aussage unter Benutzung der Mehrzahl von Lesarten in der vom Benutzer ausgewählten Sprache und in der lokalen Sprache basierend auf der Fahrzeugposition ausgibt.

10. Navigationssystem nach einem der Ansprüche 1 bis 9, weiterhin umfassend eine Führungsdauer-Bestimmungseinrichtung (36) zur Bestimmung einer erlaubten Zeit, bis die Ton-Navigation endet,
wobei, wenn die Führungsdauer-Bestimmungseinrichtung (36) bestimmt, dass die erlaubte Zeit kurz ist, und die Mehrzahl von Lesarten verschiedene Prioritäten haben, die Sprachausgabeeinrichtung (7, 42) mittels Sprache eine Aussage unter Benutzung einer Lesart mit einer hohen Priorität, jedoch nicht unter Benutzung einer Lesart mit einer niedrigen Priorität, ausgibt.

## Revendications

1. Système de navigation comprenant:
un moyen (32, 34) de spécification de mot pour spécifier un mot indiquant une cible de navigation audio ;
un moyen (36) de détermination du minutage de navigation pour déterminer un minutage pour la fourniture d'une navigation audio;
un moyen (40) de formation d'un renseignement de guidage pour former, lorsque le mot spécifié par le moyen (32, 34) de spécification de mot implique une pluralité de lectures différentes, un renseignement qui utilise la pluralité de lectures différentes pour la navigation audio, lors du minutage de communication d'une navigation audio qui est déterminé par le moyen (36) de détermination du minutage de navigation;
un moyen (7, 42) d'émission de parole pour émettre, sous forme parlée, le renseignement formé par le moyen (40) de formation du renseignement de guidage; et
un moyen (30) de désignation de priorité pour désigner des priorités définies par l'utilisateur pour au moins deux lectures de ladite pluralité de lectures.

2. Système de navigation suivant la revendication 1, qui comprend en outre un moyen (22) de recherche d'itinéraire pour rechercher, pour un véhicule, un itinéraire vers une destination dans des conditions prédéterminées,
dans lequel le moyen (40) de formation du renseignement de guidage forme, pour une navigation audio de guidage d'itinéraire de véhicule, un renseignement conforme à l'itinéraire de véhicule trouvé par le moyen (22) de recherche d'itinéraire.

3. Système de navigation suivant la revendication 2, dans lequel le renseignement pour la navigation audio de guidage d'itinéraire de véhicule inclut un nom d'intersection, une direction de parcours, un nom de route, un nom de lieu, ou un point intermédiaire vers lequel le véhicule se déplace.

4. Système de navigation suivant la revendication 1, qui comprend en outre un moyen (34) de recherche d'information d'installation pour rechercher une information d'installation,
dans lequel le moyen (40) de formation du renseignement de guidage forme, pour une navigation audio vers une installation, un renseignement trouvé par le moyen (34) de recherche d'information d'installation.

5. Système de navigation selon la revendication 4, dans lequel le renseignement, pour la navigation audio vers l'installation, inclut le nom de l'installation, une adresse de l'installation, le nom d'une personne, ou l'adresse d'une personne.

6. Système de navigation suivant la revendication 1, qui comprend en outre un moyen (28) de fonctionnement pour recevoir une instruction de fonctionnement de l'utilisateur,
dans lequel le moyen (40) de formation du renseignement de guidage forme un renseignement pour confirmer le contenu de l'instruction de fonctionnement exécutée en utilisant le moyen (28) de fonctionnement.

7. Système de navigation selon la revendication 6,
dans lequel, lorsqu'une résidence personnelle est recherchée sur la base d'un numéro de téléphone, le moyen (40) de formation du renseignement de guidage forme un renseignement pour confirmer le contenu de la résidence personnelle.

8. Système de navigation selon l'une quelconque des revendications 1 à 7,
dans lequel le moyen (7, 42) d'émission de parole émet des renseignements sous forme parlée en utilisant la pluralité de lectures dans l'ordre décroissant depuis le renseignement utilisant les lectures à priorité la plus élevée, en fonction de la priorité désignée par le moyen (30) de désignation de priorité.

9. Système de navigation selon l'une quelconque des revendications 1 à 7,
dans lequel le moyen (7, 42) d'émission de parole émet un renseignement, sous forme parlée, en utilisant la pluralité de lectures dans le langage sélectionné par l'utilisateur, et dans le langage local déterminé sur la base de la position du véhicule.

10. Système de navigation selon l'une quelconque des revendications 1 à 9, qui comprend en outre un moyen (36) de détermination de la durée de guidage pour déterminer un temps alloué, jusqu'à la fin de la navigation audio,
dans lequel, lorsque le moyen de détermination (36) de la durée de navigation détermine que le temps alloué est court, et que les priorités des lectures de la pluralité de lectures sont différentes, le moyen (7, 42) d'émission de parole émet, sous forme parlée, un renseignement utilisant une lecture ayant une haute priorité, mais n'utilisant pas une lecture ayant une basse priorité.
